# EUROPÄISCHE PATENTSCHRIFT

(11) **EP 3 642 100 B1**
(45) Veröffentlichungstag und Bekanntmachung des Hinweises auf die Patenterteilung: **13.12.2023**
(21) Anmeldenummer: 18729434.3
(22) Anmeldetag: 11.06.2018
(51) Int. Cl.: B62D 27/06, B62D 65/02, B62D 27/02

(54) **VERFAHREN ZUR VERBINDUNG VON ELEMENTEN IN KRAFTFAHRZEUGEN**
METHOD OF CONNECTING ELEMENTS IN MOTOR VEHICLES
PROCÉDÉ DE LIAISON D'ÉLÉMENTS DANS DES VÉHICULES AUTOMOBILES

(30) Priorität: 22.06.2017 EP 17177312
(43) Veröffentlichungstag der Anmeldung: 29.04.2020
(73) Patentinhaber: Sika Technology AG, 6340 Baar (CH)
(72) Erfinder: WEBER, Philip, Novi, Michigan 48377 (US)
(74) Vertreter: Sika Patent Attorneys
(86) Internationale Anmeldenummer: PCT/EP2018/065393
(87) Internationale Veröffentlichungsnummer: WO 2018/234082

(56) Entgegenhaltungen:
- WO-A1-2011/131334
- WO-A1-2015/036251
- DE-A1- 19 929 057
- US-A1- 2010 092 733

## Beschreibung

Die Erfindung betrifft ein Verfahren zur Verbindung von Elementen in Kraftfahrzeugen.

Elemente, wie beispielsweise Extrusionsprofile, Gussteile oder Bleche, werden zur Verbindung häufig miteinander verklebt. Dabei kommen Klebstoffe zum Einsatz, welche als Klebstoffraupen auf ein erstes Element aufgebracht werden, wobei ein zweites zu verklebendes Element danach auf diese Klebstoffraupe aufgebracht wird zur Verklebung der beiden Elemente. Solche bekannten Verfahren haben jedoch den Nachteil, dass die Handhabung der zu verklebenden Elemente sowie die Applikation des Klebstoffes einerseits aufwendig sind und andererseits gewisse Restriktionen aufweisen. So ist es beispielsweise schwierig, mit dieser Methode ineinander verschachtelte Elemente miteinander zu verkleben. Dies ist deshalb so, weil die auf das erste Element aufgetragene Klebstoffraupe bei einer Anbringung des zweiten Elementes abgestreift werden kann, und somit nicht mehr an einer gewünschten Position vorliegt, um die Elemente miteinander zu verkleben.

Aus DE19929057A1 ist eine Fahrzeugstruktur in Skelettbauweise mit Rahmenprofilen bekannt, welche über Steckverbindungen miteinander verbunden sind. Dabei werden die Profile an den Steckverbindungen miteinander verklebt.

Aus US2010/092733A1 ist Verstärkungselement zur Verstärkung eines Hohlraumes bekannt, wobei ein Klebestoff nachträglich in einen Zwischenraum zwischen dem Verstärkungselement und dem Strukturelement hineingebracht wird.

Aus WO2011/131334A1 ist ein System zur Reparatur von Unfallfahrzeugen bekannt, wobei ein aktivierbarer Klebestoff in einem Zwischenraum zwischen einer Komponente und einer Karosserieinnenwand eingespritzt wird.

Der Erfindung liegt daher die Aufgabe zugrunde, ein verbessertes Verfahren zur Verbindung von Elementen in Kraftfahrzeugen zur Verfügung zu stellen, welches erlaubt, Elemente in Kraftfahrzeugen kostengünstiger und einfacher in der Handhabung miteinander zu verbinden.

Diese Aufgabe wird zunächst gelöst durch den Gegenstand des Anspruches 1.

Ein Vorteil des hier vorgeschlagenen Verfahrens ist es, dass damit auch Elemente miteinander verbunden werden können, welche ineinander geschoben werden und dadurch nicht auf herkömmliche Art und Weise mit Klebstoffraupen miteinander verbunden werden können. Das hier vorgeschlagene Verfahren kann somit sehr breit eingesetzt werden zur Verbindung von Elementen, ungeachtet deren Geometrie.

Ein Kerngedanke der vorliegenden Erfindung ist es, dass der Klebstoff erst dann appliziert wird, wenn die Elemente in ihrer vorgesehenen Position relativ zueinander angeordnet sind. Dies hat den Vorteil, dass dadurch beim Anordnen der Elemente relativ zueinander nicht auf bereits applizierte Klebstoffraupen Rücksicht genommen werden muss, was zur Folge hat, dass dadurch das Anordnen der Elemente effizienter und kostengünstiger gestaltet werden kann.

Bei der Verbindung von vielen Elementen ist es zudem von Vorteil, wenn zuerst alle Elemente in ihre vorgesehene Position gebracht werden können, und dass dann in einem Arbeitsgang Klebstoff in alle Hohlräume eingebracht werden kann. Somit muss nicht jedes zu verbindende Element einzeln mit Klebstoff ausgestattet werden vor dessen Anordnung.

In einer beispielhaften Ausführungsform ist das erste Element ein Profil, ein Gussteil oder ein blechförmiges Element, und das zweite Element ist ein Profil, ein Gussteil oder ein blechförmiges Element.

Karosserien von Kraftfahrzeugen werden üblicherweise aus solchen Elementen aufgebaut. Dabei kann es zu verschiedenen Kombinationen solcher Elemente kommen, welche miteinander verbunden werden sollen. Ein Hauptvorteil der vorliegenden Erfindung ist es nun, dass das hier vorgeschlagene System bzw. Verfahren zur Verbindung von Elementen universell für verschiedenste Elemente angewendet werden kann, unabhängig von deren Formgebung, Material oder Herstellungsweise. Somit kann dieses System bzw. Verfahren vielfältig im Aufbau von Kraftfahrzeugen angewendet werden.

Die Bezeichnung "blechförmiges Element" umfasst im Zusammenhang dieser Erfindung ausdrücklich sowohl Elemente aus Metall als auch Elemente aus Kunststoff oder faserverstärktem Kunststoff. Diese Bezeichnung bezieht sich daher lediglich auf die Form und nicht auf das Material des Elementes.

Die Bezeichnung "Profil" umfasst im Zusammenhang dieser Erfindung ausdrücklich Elemente, welche auf unterschiedliche Art hergestellt werden. Beispielsweise sind damit Extrusionsprofile, Innenhochdruckumformungsprofile, oder gerollte blechförmige Elemente umfasst.

Die Bezeichnung "Gussteil" umfasst im Zusammenhang dieser Erfindung ausdrücklich Elemente, welche auf unterschiedliche Art hergestellt werden. Beispielsweise sind damit durch Formguss, Blockguss, oder Strangguss hergestellte Elemente umfasst.

In einer beispielhaften Ausführungsform besteht das erste Element und/oder das zweite Element zumindest teilweise aus Metall, Kunststoff oder faserverstärktem Kunststoff.

In einer bevorzugten Weiterbildung besteht das erste und/oder das zweite Element zumindest teilweise aus Polyamid, insbesondere aus PA 6.6 (Nylon).

In einer alternativen bevorzugten Weiterbildung besteht das erste und/oder das zweite Element zumindest teilweise aus Stahl, Aluminium oder Magnesium oder aus Kombinationen von diesen Metallen.

In einer alternativen bevorzugten Weiterbildung besteht das erste Element und/oder das zweite Element zumindest teilweise aus faserverstärkten Kunststoffen der Gruppe CFRP, GFRP oder SMC.

Ein Vorteil des hier vorgeschlagenen Verfahrens ist insbesondere, dass verschiedene Materialien und Materialkombinationen miteinander verbunden werden können.

In einer beispielhaften Ausführungsform beträgt ein Abstand zwischen Schulter und zweitem Element höchstens 1 mm, bevorzugt höchstens 0,8 mm, besonders bevorzugt höchstens 0.5 mm, besonders bevorzugt höchstens 0.3 mm.

Ein derart dimensionierter Abstand zwischen Schulter und zweitem Element stellt sicher, dass der Klebstoff im Wesentlichen im Bereich des offenen Hohlraums zwischen erstem Element und zweitem Element verbleibt, und so an seiner vorgesehenen Position wirksam ist. Je nach verwendetem Klebstoff, insbesondere dessen Viskosität, kann der Abstand grösser oder kleiner gewählt werden. Grundsätzlich können die Schulter und das zweite Element direkt aneinander anliegen, sodass der Abstand 0 mm beträgt.

In einer beispielhaften Ausführungsform beträgt eine Vertiefungsbreite zwischen 3 und 50 mm, bevorzugt zwischen 5 und 40 mm, besonders bevorzugt zwischen 10 und 30 mm.

In einer beispielhaften Ausführungsform beträgt eine Vertiefungstiefe zwischen 0.5 und 5 mm, bevorzugt zwischen 0.8 und 4 mm, besonders bevorzugt zwischen 1 und 3 mm.

In einer beispielhaften Ausführungsform beträgt eine Vertiefungslänge zwischen 15 und 500 mm, bevorzugt zwischen 30 und 400 mm, besonders bevorzugt zwischen 40 und 150 mm.

Eine solche Dimensionierung der Vertiefung hat den Vorteil, dass dadurch verschieden Anwendungen des Systems bzw. Verfahrens zur Verbindung von Elementen abgedeckt werden können.

Die Vertiefung kann einen konstanten Querschnitt aufweisen, in einem alternativen Ausführungsbeispiel kann die Vertiefung jedoch auch einen nicht-konstanten Querschnitt aufweisen. Dabei kann sowohl die Länge, die Breite, als auch die Tiefe der Vertiefung nicht-konstant ausgebildet sein. Somit sind beispielsweise auch Vertiefungen realisierbar, welche an Enden weniger tief sind als in einer Mitte der Vertiefung (beispielsweise unter einer Einfüllöffnung), oder Vertiefungen, welche in Draufsicht eine ovale Formgebung aufweisen.

Natürlich muss die Vertiefung nicht linear über dessen gesamte Länge verlaufen, sondern kann auch gebogen oder mit diversen Richtungsänderungen ausgeführt werden.

In einer beispielhaften Ausführungsform hat die Vertiefung einen V-förmigen oder einen U-förmigen oder einen eckigen oder einen halbrunden oder einen unregelmässig geformten Querschnitt.

In einer weiteren beispielhaften Ausführungsform hat die Vertiefung einen unregelmässig geformten Querschnitt. Beispielsweise kann dabei ein Vertiefungsboden schräg ausgestaltet werden, so dass der darin verfestigte Klebstoff einen keilförmigen Querschnitt aufweist. Ein solcher keilförmiger Querschnitt des Klebstoffes und ein entsprechend komplementär ausgebildeter keilförmiger Querschnitt des Vertiefungsbodens können eine Verbesserung der Zugbelastung der verklebten Elemente bewirken, weil durch diese Geometrie eine Keilwirkung erzielt werden kann. Somit kann beispielsweise das erste Element besser hinsichtlich Zugbelastung im zweiten Element verklebt werden.

In ähnlicher Weise kann der Querschnitt der Vertiefung auch mit einem Hinterschnitt oder mit anderen Verhakungen ausgebildet werden, um eine noch bessere Verbindung zwischen den Elementen zu erreichen.

In einer weiteren beispielhaften Ausführungsform weist die Vertiefung Verzweigungen auf.

In einer weiteren beispielhaften Ausführungsform weist die Vertiefung eine Hauptvertiefung und damit verbundene Seitenvertiefungen auf. Die Anordnung und Ausgestaltung der Vertiefung bzw. der Vertiefungen auf der Oberfläche des ersten Elementes ist davon abhängig, an welchen Stellen das erste Element mit dem zweiten Element verklebt werden soll. Zu diesem Zweck können Vertiefungen, welche mehrere separat voneinander ausgestaltete Vertiefungen haben, vorgesehen werden, oder aber es können Vertiefungen mit Verzweigungen bzw. Seitenvertiefungen vorgesehen werden. Insbesondere können Seitenvertiefungen dazu verwendet werden, die Klebefläche zwischen erstem Element und zweitem Element zu vergrössern.

In einer bevorzugten Ausführungsform hat das erste oder das zweite Element eine Einfüllöffnung zur Einbringung des Klebstoffes in den Hohlraum.

Der Vorteil einer solchen Einfüllöffnung ist es, dass der Klebstoff direkt in den Hohlraum eingebracht werden kann.

In einer bevorzugten Weiterbildung mündet die Einfüllöffnung direkt in die Vertiefung. Dabei kann die Einfüllöffnung mittig in Bezug auf eine Länge und/oder Breite der Vertiefung angeordnet sein.

Weiterhin kann die Einfüllöffnung im ersten Element, welches auch den Vertiefung aufweist, angeordnet sein, oder aber die Einfüllöffnung kann im zweiten Element angeordnet sein. Grundsätzlich ist die Anordnung der Einfüllöffnung davon abhängig, wie die Elemente zugänglich sind (in einer Situation, in welcher der Klebstoff eingebracht werden soll).

In einer beispielhaften Ausführungsform hat die Einfüllöffnung einen Durchmesser von 0.5 bis 10 mm, bevorzugt von 0.8 bis 8 mm, besonders bevorzugt von 1 bis 5 mm.

In einer beispielhaften Ausführungsform sind das erste Element und das zweite Element zur Vorfixierung des ersten und des zweiten Elementes zumindest teilweise miteinander verbunden, bevor der Klebstoff eingebracht wird. In einer bevorzugten Ausführungsform werden die Elemente durch eine einseitige oder zweiseitige mechanische Fügetechnik, insbesondere durch Nieten, Schweissen, Schrauben oder Bolzen vorfixiert.

Solche Elemente zur Fixierung des ersten Elementes gegenüber dem zweiten Element haben den Vorteil, dass die Elemente in einer vorgesehenen Position verbleiben, bevor der Klebstoff verfestigt und/oder ausgehärtet ist.

In einer beispielhaften Ausführungsform ist das erste Element und das zweite Element ein Profil. Beispielsweise weisen diese Profile unterschiedlich grosse Querschnitte auf, so dass das kleinere Profil in das grössere Profil einschiebbar ist. Dabei kann die Vertiefung wahlweise im kleineren oder im grösseren Profil vorgesehen sein, was bedeutet, dass wahlweise das grössere Profil das erste Element oder das zweite Element im Sinne dieser Erfindung sein kann.

In einem weiteren Ausführungsbeispiel sind das erste und das zweite Element aus je einem Profil und einem blechförmigen Element ausgebildet. Dabei kann wiederum die Vertiefung wahlweise im blechförmigen Element oder aber im Profil vorgesehen sein. Je nachdem ist demnach das Profil das erste oder das zweite Element.

In einer weiteren beispielhaften Ausführungsform sind das erste und das zweite Element je ein Gussteil und ein Profil. Dabei kann beispielsweise das Gussteil eine Öffnung aufweisen, in welche das Profil einschiebbar ist. Wiederum kann die Vertiefung sowohl im Profil oder aber im Gussteil vorgesehen sein. Dies bedeutet wiederum, dass das Gussteil das erste oder aber das zweite Element im Sinne dieser Erfindung sein kann.

In einer weiteren beispielhaften Ausführungsform sind das erste und das zweite Element je ein Gussteil. Beispielsweise kann dabei eines der Gussteile eine Öffnung aufweisen, in welches ein Teil des zweiten Gussteils einschiebbar ist. Wiederum kann die Vertiefung im einen oder im anderen Gussteil vorgesehen sein. Demnach ist das Gussteil mit der Öffnung wahlweise das erste oder das zweite Element im Sinne dieser Erfindung.

In einer weiteren beispielhaften Ausführungsform sind das erste und das zweite Element blechförmige Elemente. Dabei kann die Vertiefung wahlweise im ersten oder im zweiten blechförmigen Element vorgesehen sein. Entsprechend ist das erste oder das zweite blechförmige Element das erste Element oder das zweite Element im Sinne dieser Erfindung.

In einem weiteren Ausführungsbeispiel sind das erste und das zweite Element je ein blechförmiges Element und ein Gussteil. Beispielsweise können zwei blechförmige Elemente, welche einen U-förmigen Querschnitt aufweisen, zu einem Hohlraum verschweisst oder verklebt werden. Das Gussteil kann beispielsweise in diesem Hohlraum angeordnet werden. Wiederum kann die Vertiefung entweder im blechförmigen Element oder im Gussteil angeordnet werden. Entsprechend ist das Gussteil das erste oder das zweite Element im Sinne dieser Erfindung.

Es versteht sich von selbst, dass auch mehr als zwei Elemente miteinander verklebt werden können.

Ein wesentlicher Vorteil des hier vorgeschlagenen Verfahrens ist es, dass unterschiedlichst geformte Elemente miteinander verbunden werden können, weil Vertiefungen an jedem beliebigen Element vorgesehen werden können. Dies erlaubt einen vielfältigen Einsatz des hier vorgeschlagenen Systems bzw. Verfahrens verbundener Elemente für Kraftfahrzeuge.

In einer beispielhaften Ausführungsform umfass das Verfahren den zusätzlichen
Schritt: Formen der Vertiefung an der Oberfläche des ersten Elementes.

Das Formen der Vertiefung kann dabei bei der Herstellung des ersten Elementes vorgenommen werden, oder aber die Vertiefung kann am bereits hergestellten ersten Element geformt werden. Je nach Herstellungsverfahren des ersten Elementes kann eine geeignete Variante gewählt werden.

In einer beispielhaften Weiterbildung wird die Vertiefung beim Formen durch Prägen, Einprägen, Stanzen, Spanen, Giessen, oder Abformen gebildet.

Wiederum kann hier je nach Herstellungsverfahren des ersten Elementes ein geeignetes Verfahren gewählt werden, um die Vertiefung auszubilden.

In einer beispielhaften Ausführungsform umfass das Verfahren den zusätzlichen Schritt:
Ausbilden einer Einfüllöffnung im ersten Element oder im zweiten Element, wobei die Einfüllöffnung einen Zugang zum Hohlraum bildet.

In einer beispielhaften Ausführungsform umfasst das Verfahren den weiteren Schritt: Härten des Klebstoffes.

In einer beispielhaften Weiterbildung wird die Härtung des Klebstoffes durch eine Anwendung einer Temperatur von zumindest 120°C, bevorzugt von zumindest 140°C, besonders bevorzugt von zumindest 160°C ausgeführt.

Beispielsweise kann die Härtung des Klebstoffes in einem Ofen stattfinden, wie er üblicherweise nach der kathodischen Tauchlackierung (KTL) der Karosserie zur Anwendung kommt. In solchen Öfen herrschen üblicherweise Temperaturen zwischen 120°C und 220°C. Solche Temperaturen eignen sich insbesondere für das Aushärten von Klebstoffen, welche im Zusammenhang mit dieser Erfindung verwendet werden können. Da die Karosserie mit den verbundenen Elementen und dem verfestigten Klebstoff sowieso durch den Prozess der Tauchlackierung und anschliessender Hitzeanwendung zur Aushärtung der Lackierung geht, ist eine Nutzung dieser Hitzeanwendung im Ofen nach der Tauchlackierung zur Aushärtung des Klebstoffes besonders vorteilhaft.

In einer ersten alternativen Ausführungsform hat der Klebstoff beim Einbringen in den Hohlraum eine Temperatur von 10 bis 100 °C. In einer bevorzugten Weiterbildung hat der Klebstoff beim Einbringen in den Hohlraum eine Temperatur von 20 bis 80 °C, besonders bevorzugt von 30 bis 70 °C.

In einer zweiten alternativen Ausführungsform wird der Klebstoff mit einem Volumenstrom von 0.1 bis 5 cm3/s in den Hohlraum eingebracht. In einer bevorzugten Weiterbildung wird der Klebstoff mit einem Volumenstrom von 0.5 bis 4 cm3/s, besonders bevorzugt von 1 bis 3 cm3/s in den Hohlraum eingebracht.

In einer beispielhaften Ausführungsform wird der Klebstoff beim Einbringen in den Hohlraum durch eine Pumpe aus einem Klebstofftank gefördert.

In einer beispielhaften Ausführungsform wird der Klebstoff beim Einbringen in den Hohlraum durch eine Einfüllöffnung im ersten oder im zweiten Element gefördert.

Das Vorsehen von einer Einfüllöffnung im ersten oder im zweiten Element hat den Vorteil, dass dadurch der Klebstoff auf einfache Art und Weise, beispielsweise mit Robotern, in den Hohlraum eingebracht werden kann.

Es können verschiedene Klebstoffe verwendet werden. Beispielsweise kann der Klebstoff ausgewählt sein aus der Gruppe: einkomponenten Epoxid-Klebstoff, zwei- oder mehrkomponenten Epoxid-Klebstoff, zweikomponenten Acrylklebstoff, oder zweikomponenten Polyurethanklebstoff.

In einem spezifischen Ausführungsbeispiel wird ein Klebstoff verwendet, welcher unter dem Namen SikaPower^{®} kommerziell erhältlich ist. Beispielsweise können die kommerziell erhältlichen Produkte SikaPower^{®}-497 und SikaPower^{®}-477R verwendet werden.

In alternativen spezifischen Ausführungsbeispielen wird ein Klebstoff verwendet, welcher unter dem Namen SikaFast^{®} oder SikaForce^{®} kommerziell erhältlich ist.

Je nach verwendeten Materialien und Oberflächen des ersten und zweiten Elementes und/oder nach Applikationsparametern des Klebstoffes kann ein geeigneter Klebstoff ausgewählt werden.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie eines Kraftfahrzeuges;
- Fig. 2: eine schematische Darstellung eines beispielhaften ersten Elementes;
- Fig. 3: eine schematische Darstellung eines beispielhaften ersten und zweiten Elementes;
- Fig. 4a bis 4c: eine schematische Darstellung eines beispielhaften ersten Elementes und zweiten Elementes;
- Fig. 5a und 5b: eine schematische Darstellung eines beispielhaften ersten Elementes und zweiten Elementes;
- Fig. 6a und 6b: eine schematische Darstellung eines beispielhaften ersten Elementes und zweiten Elementes; und
- Fig. 7: eine schematische Darstellung einer Einbringungseinrichtung.

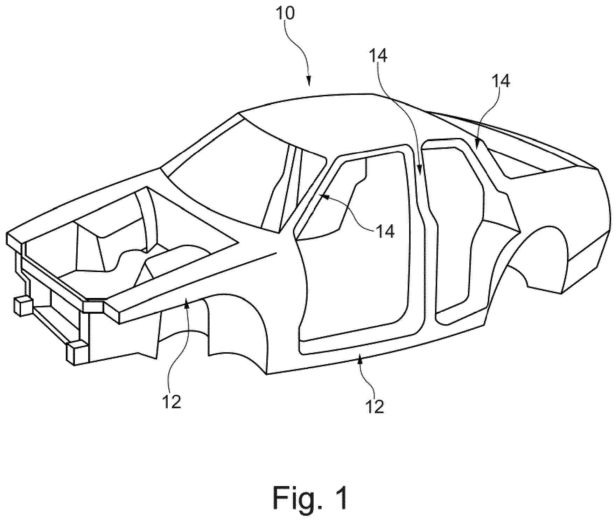

In Fig. 1 ist eine Karosserie 10 eines Kraftfahrzeugs schematisch dargestellt. Die Karosserie 10 weist dabei verschiedene Strukturen auf, wie beispielsweise Säulen 14 und Verstrebungen 12. Solche und andere Strukturen der Karosserie 10 müssen auf geeignete Art und Weise miteinander verbunden werden. Dabei können insbesondere Profile, Gussteile und blechförmige Elemente miteinander verbunden werden.

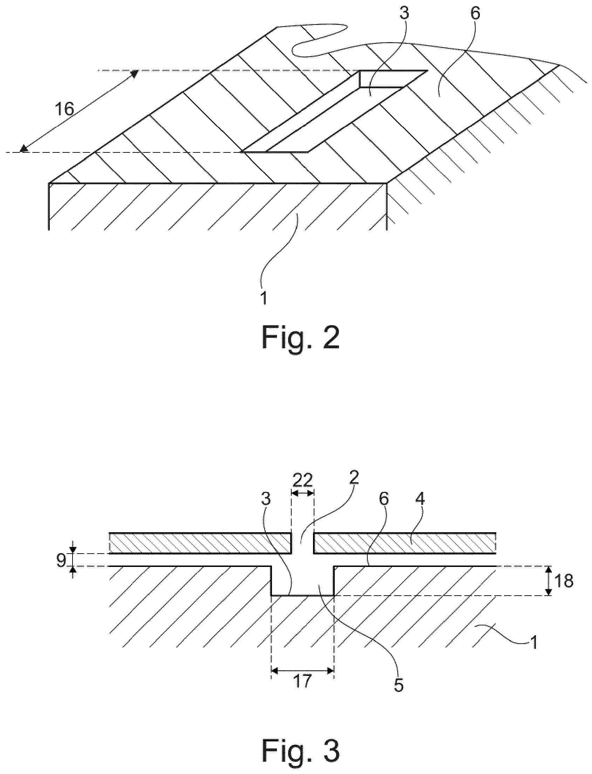

In Fig. 2 ist schematisch ein Ausschnitt eines ersten Elementes 1 dargestellt. Das erste Element 1 hat dabei auf seiner Oberfläche eine Vertiefung 3. Dabei bildet die Oberfläche des ersten Elementes 1 neben der Vertiefung 3 eine Schulter 6 aus. Die Vertiefung 3 hat dabei eine Vertiefungslänge 16.

In Fig. 3 ist schematisch ein Querschnitt eines Ausschnittes eines ersten Elementes 1 und eines zweiten Elementes 4 dargestellt. Das erste Element 1 hat wiederum eine Vertiefung 3, welche auf der Oberfläche des ersten Elementes 1 ausgebildet ist. Die Vertiefung 3 hat dabei eine Vertiefungsbreite 17 und eine Vertiefungstiefe 18. Der Querschnitt der Vertiefung 3 ist in diesem Ausführungsbeispiel rechteckig ausgebildet. Neben der Vertiefung 3 ist wiederum eine Schulter 6 ausgebildet.

Das zweite Element 4 ist nun derart relativ zum ersten Element 1 angeordnet, dass zwischen der Vertiefung 3 des ersten Elementes 1 und dem zweiten Element 4 ein Hohlraum 5 gebildet wird.

Dabei besteht ein Abstand 9 zwischen Schulter 6 des ersten Elementes 1 und der Oberfläche des zweiten Elementes 4. In Figur 3 ist dieser Abstand 9 zur besseren Übersichtlichkeit überhöht dargestellt. Gemäss einer beispielhaften Ausführungsform beträgt dieser Abstand 9 höchsten 1 mm.

Das zweite Element 4 hat in diesem Ausführungsbeispiel eine Einfüllöffnung 2, welche einen Durchmesser 22 hat. Durch diese Einfüllöffnung 2 kann der Klebstoff (nicht dargestellt in dieser Figur) in den Hohlraum 5 eingebracht werden.

In einer nicht dargestellten alternativen Ausführungsform kann die Einfüllöffnung auch im ersten Element 1 angeordnet sein. Je nach Zugänglichkeit kann das Anordnen der Einfüllöffnung im ersten oder im zweiten Element Vorteile mit sich bringen.

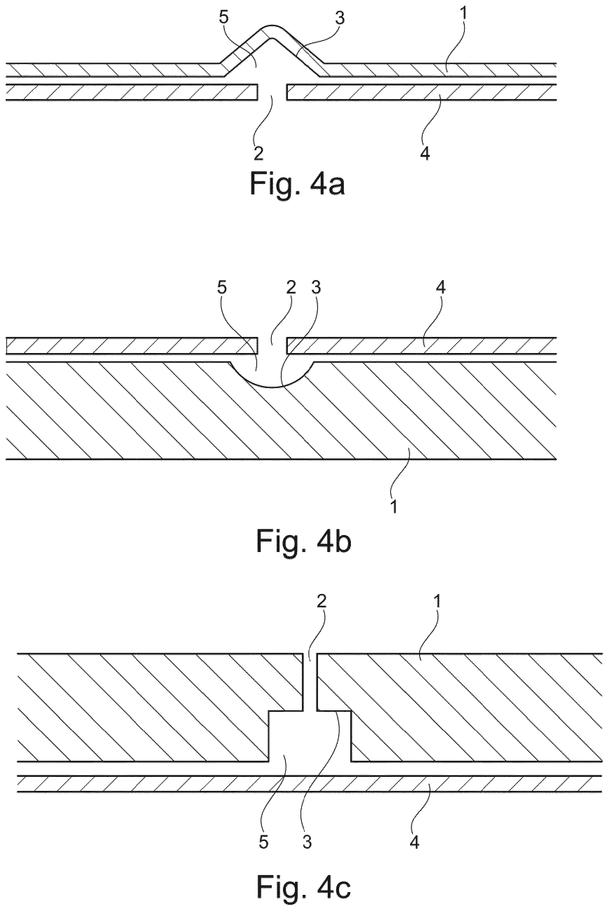

In den Fig. 4a bis 4c sind verschiedene Ausführungsformen eines beispielhaften ersten Elementes 1 und eines beispielhaften zweiten Elementes 4 dargestellt. Auf einer Oberfläche des ersten Elementes 1 ist jeweils eine Vertiefung 3 angeordnet. Zwischen dieser Vertiefung 3 und dem zweiten Element 4 ist jeweils ein Hohlraum 5 gebildet.

Das beispielhafte erste Element 1 in Fig. 4a hat eine Vertiefung 3, welche einen V-förmigen Querschnitt aufweist. In diesem Ausführungsbeispiel ist die Einfüllöffnung 2 im zweiten Element 4 angeordnet.

Im Ausführungsbeispiel gemäss Fig. 4b hat das erste Element 1 eine Vertiefung 3, welche einen U-förmigen oder halbkreisförmigen Querschnitt aufweist. In diesem Ausführungsbeispiel ist die Einfüllöffnung 2 wiederum im zweiten Element 4 angeordnet.

Das in Fig. 4c dargestellte Ausführungsbeispiel eines ersten Elementes 1 hat eine Vertiefung 3, welche einen rechteckigen Querschnitt aufweist. In diesem Ausführungsbeispiel ist die Einfüllöffnung 2 im ersten Element 1 angeordnet.

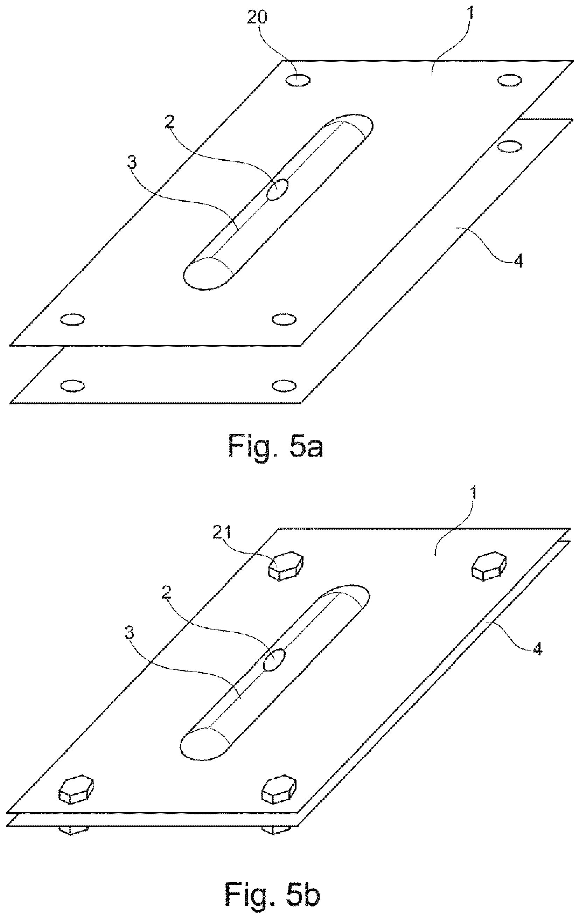

In den Fig. 5a und 5b ist jeweils ein erstes Element 1 und ein zweites Element 4 dargestellt, wobei in Fig. 5a die Elemente vor ihrer Anordnung zur Verklebung dargestellt sind, und in Fig. 5b sind die Elemente für eine Verklebung relativ zueinander angeordnet. In diesem Ausführungsbeispiel sind die Elemente 1, 4 jeweils als Metallbleche ausgebildet. Dabei ist die Vertiefung 3 im ersten Element 1 durch Prägen oder Stanzen in das Blech geformt worden.

In Fig. 5a sind Löcher 20 in den Elementen 1, 4 dargestellt. In Fig. 5b sind Befestigungsmittel 21 gezeigt, welche in diesem Beispiel als Schrauben ausgeführt sind und durch die Löcher 20 hindurchragen. Diese Befestigungsmittel 21 dienen der Fixierung des ersten Elementes 1 und des zweiten Elementes 4 relativ zueinander, bevor der Klebstoff durch die Einfüllöffnung 2 eingebracht wird.

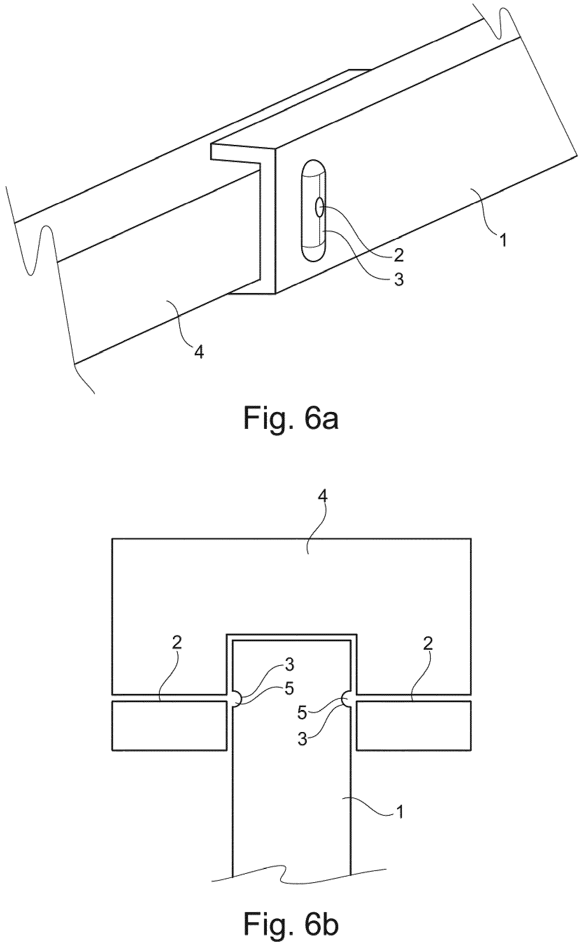

In Fig. 6a ist eine beispielhafte Kombination eines ersten Elementes 1 mit einem zweiten Element 4 dargestellt. Dabei ist das erste Element 1 als gebogenes blechförmiges Element ausgebildet, und das zweite Element 4 ist als Profil ausgebildet.

In diesem Ausführungsbeispiel ist die Einfüllöffnung 2 im ersten Element 1 angeordnet.

In Fig. 6b ist eine weitere beispielhafte Kombination eines ersten Elementes 1 mit einem zweiten Element 4 dargestellt. Dabei ist das erste Element 1 als Profil ausgebildet, und das zweite Element 4 ist als Gussteil ausgebildet. In diesem Ausführungsbeispiel ist die Einfüllöffnung 2 im zweiten Element 4 angeordnet.

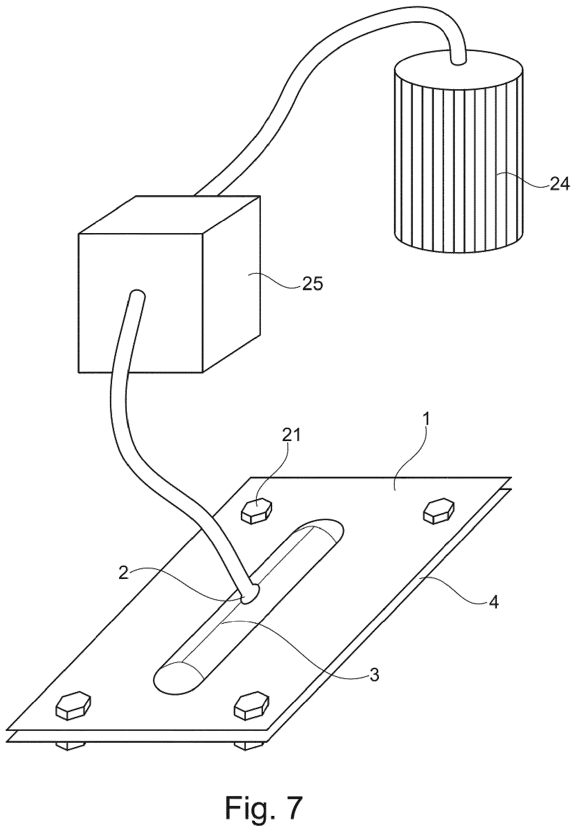

In Fig. 7 ist eine Einrichtung zur Einbringung des Klebstoffes in den Hohlraum zwischen dem ersten und dem zweiten Element (nicht ersichtlich auf dieser Darstellung) dargestellt. Dabei fördert eine Pumpe 25 Klebstoff aus einem Klebstofftank 24 durch eine Einfüllöffnung 2 im ersten Element 1 in den Hohlraum zwischen erstem Element 1 und zweitem Element 4.

Das erste Element 1 und das zweite Element 4 sind durch Befestigungsmittel 21 vorfixiert, sodass eine relative Anordnung der Elemente zueinander bei der Einbringung des Klebstoffes sich nicht verändert.

### Figurenlegende

- 1: erstes Element
- 2: Einfüllöffnung
- 3: Vertiefung
- 4: zweites Element
- 5: Hohlraum
- 6: Schulter
- 9: Abstand zwischen Schulter und zweitem Element
- 10: Karosserie
- 12: Verstrebung
- 14: Säule
- 16: Vertiefungslänge
- 17: Vertiefungsbreite
- 18: Vertiefungstiefe
- 20: Loch
- 21: Befestigungsmittel
- 22: Durchmesser der Einfüllöffnung
- 24: Klebstofftank
- 25: Pumpe

## Patentansprüche

1. Verfahren zur Verbindung von Elementen eines Kraftfahrzeugs, das Verfahren umfassend die Schritte:
Bereitstellen eines ersten Elementes (1), wobei das erste Element (1) eine Vertiefung (3) an einer Oberfläche hat;
Bereitstellen eines zweiten Elementes (4);
Anordnen des ersten Elementes (1) und des zweiten Elementes (4) derart, dass eine Oberfläche des zweiten Elements (4) und die Vertiefung (3) des ersten Elements (1) einen Hohlraum (5) bilden;
Einbringen eines Klebstoffes in den Hohlraum (5), wobei der Klebstoff durch eine Einfüllöffnung (2) in den Hohlraum (5) eingebracht wird;
**dadurch gekennzeichnet, dass**
der Klebstoff beim Einbringen in den Hohlraum (5) eine Temperatur von 10 bis 100 °C hat, und/oder wobei der Klebstoff mit einem Volumenstrom von 0.1 bis 5 cm³/s in den Hohlraum (5) eingebracht wird.

2. Verfahren nach Anspruch 1, wobei das Verfahren den zusätzlichen Schritt umfasst: Formen der Vertiefung (3) an der Oberfläche des ersten Elementes (1).

3. Verfahren nach Anspruch 2, wobei die Vertiefung (3) beim Formen durch Prägen oder durch Einprägen oder durch Stanzen ausgebildet wird.

4. Verfahren nach einem der vorhergehenden Ansprüche, wobei das Verfahren den zusätzlichen Schritt umfasst:
Ausbilden einer Einfüllöffnung (2) im ersten Element (1) oder im zweiten Element (4), wobei die Einfüllöffnung (2) einen Zugang zum Hohlraum (5) bildet.

5. Verfahren nach einem der vorhergehenden Ansprüche, wobei das Verfahren den zusätzlichen Schritt umfasst:
Härten des Klebstoffes.

6. Verfahren nach einem der vorhergehenden Ansprüche, wobei der Klebstoff den Hohlraum (5) zumindest teilweise ausfüllt, und dadurch das erste Element (1) mit dem zweiten Element (4) verklebt.

7. Verfahren nach einem der vorhergehenden Ansprüche, wobei das erste Element (1) und/oder das zweite Element (4) ein blechförmiges Element, ein Profil oder ein Gussteil ist.

8. Verfahren nach einem der vorhergehenden Ansprüche, wobei das erste Element (1) und/oder das zweite Element (4) zumindest teilweise aus Metall, Kunststoff oder faserverstärktem Kunststoff bestehen.

9. Verfahren nach einem der vorhergehenden Ansprüche, wobei ein Abstand (9) zwischen Schulter (6) und zweitem Element (4) höchstens 1 mm beträgt.

10. Verfahren nach einem der vorhergehenden Ansprüche, wobei eine Vertiefungsbreite (17) zwischen 3 und 50 mm beträgt und/oder wobei eine Vertiefungstiefe (18) zwischen 0.5 und 5 mm beträgt und/oder wobei eine Vertiefungslänge (16) zwischen 15 und 500 mm beträgt.

11. Verfahren nach einem der vorhergehenden Ansprüche, wobei der Klebstoff ausgewählt ist aus der Gruppe: einkomponenten Epoxid-Klebstoff, zwei- oder mehrkomponenten Epoxid-Klebstoff, zweikomponenten Acrylklebstoff, zweikomponenten Polyurethanklebstoff.

12. Verfahren nach einem der vorhergehenden Ansprüche, wobei die Einfüllöffnung (2) einen Durchmesser (22) von 0.5 bis 10 mm hat.

13. Verfahren nach einem der vorhergehenden Ansprüche, wobei die Vertiefung (3) einen rechteckigen, V-förmigen, U-förmigen, oder unregelmässig geformten Querschnitt hat.

## Claims

1. Method for connecting elements of a motor vehicle, the method comprising the steps of:
providing a first element (1), the first element (1) having a depression (3) on one surface;
providing a second element (4);
arranging the first element (1) and the second element (4) in such a way that a surface of the second element (4) and the depression (3) of the first element (1) form a cavity (5);
introducing an adhesive into the cavity (5), the adhesive being introduced into the cavity (5) through a filling aperture (2),
**characterized in that**
the adhesive during introduction into the cavity (5) has a temperature of 10 to 100°C, and/or wherein the adhesive is introduced into the cavity (5) with a volume flow rate of 0.1 to 5 cm³/s.

2. Method according to Claim 1, wherein the method comprises the following additional step: shaping the depression (3) on the surface of the first element (1).

3. Method according to Claim 2, wherein the depression (3) is formed during shaping by embossing or by impressing or by stamping.

4. Method according to any of the preceding claims, wherein the method comprises the following additional step:
forming a filling aperture (2) in the first element (1) or in the second element (4), the filling aperture (2) forming an access to the cavity (5).

5. Method according to any of the preceding claims, wherein the method comprises the following additional step:
curing the adhesive.

6. Method according to any of the preceding claims, wherein the adhesive at least partially fills the cavity (5) and thereby bonds the first element (1) to the second element (4).

7. Method according to any of the preceding claims, wherein the first element (1) and/or the second element (4) are/is a panellike element, a profile or a casting.

8. Method according to any of the preceding claims, wherein the first element (1) and/or the second element (4) consist/consists at least partially of metal, plastic or fiber-reinforced plastic.

9. Method according to any of the preceding claims, wherein a distance (9) between shoulder (6) and second element (4) is at most 1 mm.

10. Method according to any of the preceding claims, wherein a depression width (17) is between 3 and 50 mm and/or wherein a depression depth (18) is between 0.5 and 5 mm and/or wherein a depression length (16) is between 15 and 500 mm.

11. Method according to any of the preceding claims, wherein the adhesive is selected from the following group: one-component epoxy adhesive, two-component or multicomponent epoxy adhesive, two-component acrylic adhesive, two-component polyurethane adhesive.

12. Method according to any of the preceding claims, wherein the filling aperture (2) has a diameter (22) of 0.5 to 10 mm.

13. Method according to any of the preceding claims, wherein the depression (3) has a rectangular, V-shaped, U-shaped or irregularly shaped cross section.

## Revendications

1. Procédé d'assemblage d'éléments d'un véhicule à moteur, le procédé comprenant les étapes suivantes :
fourniture d'un premier élément (1), le premier élément (1) ayant un renfoncement (3) sur une surface ;
fourniture d'un deuxième élément (4) ;
disposition du premier élément (1) et du deuxième élément (4) de façon qu'une surface du deuxième élément (4) et le renfoncement (3) du premier élément (1) forment une cavité (5) ;
introduction d'un adhésif dans la cavité (5), l'adhésif étant introduit dans la cavité (5) par un orifice de remplissage (2) ;
**caractérisé en ce que**
l'adhésif, lors de son introduction dans la cavité (5), a une température de 10 à 100 °C, et/ou l'adhésif est introduit dans la cavité (5) selon un débit volumique de 0,1 à 5 cm³/s.

2. Procédé selon la revendication 1, le procédé comprenant l'étape supplémentaire suivante : formage du renfoncement (3) contre la surface du premier élément (1) .

3. Procédé selon la revendication 2, le renfoncement (3) étant, lors du formage, réalisé par estampage ou par gaufrage ou par formage à la presse.

4. Procédé selon l'une des revendications précédentes, le procédé comprenant l'étape suivante :
réalisation d'un orifice de remplissage (2) dans le premier élément (1) ou dans le deuxième élément (4), l'orifice de remplissage (2) formant un accès à la cavité (5).

5. Procédé selon l'une des revendications précédentes, le procédé comprenant l'étape supplémentaire suivante :
durcissement de l'adhésif.

6. Procédé selon l'une des revendications précédentes, dans lequel l'adhésif remplit au moins partiellement la cavité (5), le premier élément (5) étant de ce fait collé au deuxième élément (4).

7. Procédé selon l'une des revendications précédentes, dans lequel le premier élément (1) et/ou le deuxième élément (4) est un élément en forme de tôle, un profilé ou une pièce moulée en fonte.

8. Procédé selon l'une des revendications précédentes, dans lequel le premier élément (1) et/ou le deuxième élément (4) sont au moins partiellement constitués d'un métal, d'un plastique ou d'un plastique renforcé par des fibres.

9. Procédé selon l'une des revendications précédentes, dans lequel une distance (9) entre l'épaulement (6) et le deuxième élément (4) est d'au plus 1 mm.

10. Procédé selon l'une des revendications précédentes, dans lequel une largeur de renfoncement (17) est comprise entre 3 et 50 mm et/ou dans lequel une profondeur de renfoncement (18) est comprise entre 0,5 et 5 mm et/ou dans lequel une longueur de renfoncement (16) est comprise entre 15 et 500 mm.

11. Procédé selon l'une des revendications précédentes, dans lequel l'adhésif est choisi dans le groupe : adhésif époxyde mono-composant, adhésif époxyde bi- ou multi-composant, adhésif acrylique bi-composant, adhésif de polyuréthane bi-composant.

12. Procédé selon l'une des revendications précédentes, dans lequel l'orifice d'introduction (2) a un diamètre (22) de 0,5 à 10 mm.

13. Procédé selon l'une des revendications précédentes, dans lequel le renforcement (3) a une section transversale rectangulaire, en V, en U, ou de forme irrégulière.
